# EUROPEAN PATENT SPECIFICATION

(11) **EP 2 207 303 B1**
(45) Date of publication and mention of the grant of the patent: **19.06.2013**
(21) Application number: 09735708.1
(22) Date of filing: 10.04.2009
(51) Int. Cl.: H04L 9/32, H04L 9/00, G07F 7/04, G07F 7/08, G06Q 20/00

(54) **Method, system and entity for bill authentication in network serving**
Verfahren, Vorrichtung und Einheit zur Rechnungsauthentifizierung in einer Netzwerkversorgung
Procédé, système et entité d authentification de factures dans la desserte de réseaux

(30) Priority: 25.04.2008 CN 200810094001
(43) Date of publication of application: 14.07.2010
(73) Proprietor: Huawei Technologies Co., Ltd., Longgang District, Shenzhen Guangdong 518129 (CN)
(72) Inventor: WANG, Lei, Shenzhen (CN); YANG, Jian, Shenzhen (CN); CHEN, Guoqiao, Shenzhen (CN); DONG, Ting, Shenzhen (CN); ZHANG, Huiping, Shenzhen (CN); FAN, Shunan, Shenzhen (CN)
(74) Representative: Kreuz, Georg Maria
(86) International application number: PCT/CN2009/071234
(87) International publication number: WO 2009/129719

(56) References cited:
- WO-A2-03/032126
- WO-A2-2007/072318
- CN-A- 101 030 859
- CN-A- 101 207 482
- CN-A- 101 242 272
- CN-A- 101 277 234
- US-A1- 2006 218 396
- US-A1- 2008 022 356
- SHEN HAIBO ET AL.: 'Analysis of Cross-domain SSO Authentication for Web Services' APPLICATION RESEARCH OF COMPUTERS no. 2, 2006, pages 116 - 118, XP008134576

## Description

### FIELD OF THE INVENTION

The present invention relates to the web service field, and in particular, to a method for authenticating user login token for web services, and a system for authenticating tokens in which this method is applied for web services provided by the Liberty Federation.

### BACKGROUND

The single sign-on (SSO) technology enables a user to access multiple service providers (SPs). By entering the user name and password only once, the user can roam freely among the SPs in the trust federation. This makes it unnecessary to reenter the user name and password each time when an SP is accessed.

When a user is accessing an SP through the SSO, the process of exchanging and processing message comprises:
sending, by the user, a login request to the SP through a user agent;
obtaining, by the SP, an appropriate identity provider (IdP) address, and returning the IdP address to the user agent;
sending, by the user, an access request to the IdP corresponding to the IdP address through the user agent;
processing, by the IdP, the received access request, authenticating the unauthenticated user to generate a short-lived security assertion markup language (SAML) assertion that is buffered in the IdP, and returning the universal resource identifier (URI) of an SAML artifact to the user agent; and
presenting, by the user agent, the SAML artifact to the SP to request successful authentication by the SP and user access. To confirm the current access right of the user, if the SP needs to grant the user access, it needs to confirm the obtained SAML artifact with the IdP and grant or refuse the user's initial request for accessing its resources according to the response returned by the IdP.

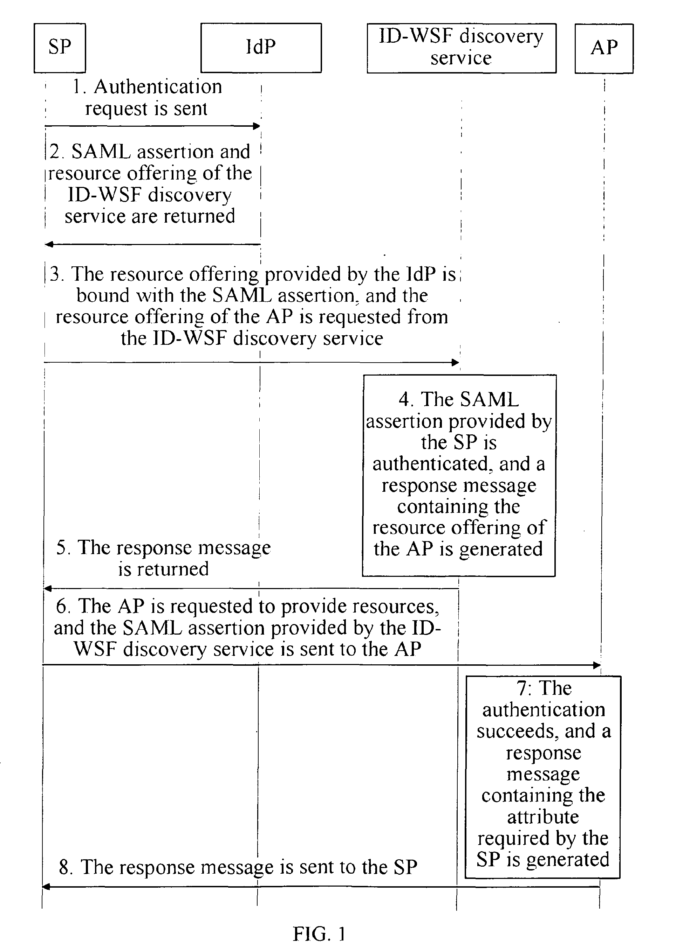

In some circumstances, if the user implements the SSO once and needs to access other SPs or resources with different rights in the same SP, the SAML artifact confirmed by the SP through the IdP needs to be further confirmed by other servers. As shown in FIG. 1, the SP needs to obtain the user identity attribute. The authentication process comprises the following steps:
1. An SP, as a web service requester (WSR), sends an authentication request to an IdP for authenticating the user's SAML artifact.
2. The IdP generates an SAML assertion after the user's SAML artifact is authenticated, sends the SAML assertion to the SP, and returns the resource offering of the identity web-service framework (ID-WSF) discovery service of the user, where the SP can use the resource offering to access the ID-WSF discovery service.
3. As the preceding SAML assertion corresponds to the preceding resource offering, the SP binds the resource offering and the SAML assertion provided by the IdP, and requests the resource offering of the attribute provider (AP) from the corresponding ID-WSF discovery service.
4. The ID-WSF discovery service authenticates the SAML assertion provided by the SP, and generates a response message after authentication succeeds, where the response message includes the resource offering of the AP and a new SAML assertion.
5. The ID-WSF discovery service sends the response message to the SP.
6. The SP is authenticated by the AP through the SAML assertion and the resource offering provided by the ID-WSF discovery service, and requests necessary attribute information from the AP.
7. The AP authenticates the SP, and generates a response message carrying the attribute information required by the SP.
8. The AP sends the response message to the SP.

In implementing the preceding authentication, the inventor has identified the following problems with the conventional art: Web service providers (WSPs) such as the IdP and the ID-WSF discovery service need to separately generate an SAML assertion to authenticate the assertion generated by subsequent devices that are trying to accessing these WSPs.

The preceding SAML assertion is a token to be authenticated. To implement the preceding process, the IdP and the ID-WSF discovery service are required to have the functions of generating and maintaining tokens. Consequently, the logical functions of the IdP and the ID-WSF discovery service are complicated, and tokens cannot be managed and maintained in a centralized manner.

WO 03/032126 A2 provides a multi-factor authentication system, wherein a suspect user seeks access to a network resource from an access authority utilizing a passcode received from an authentication authority. The suspect user communicates a device ID and a PIN from the device over an ancillary communication network; the authentication authority responds back over the ancillary communications network with a passcode encrypted with the public key of the device; and the suspect user decrypts and communicates over a communication network the passcode with the user ID to the access authority.

### SUMMARY

A method, and an entity for authenticating tokens for web services are provided in the embodiments to manage tokens in a centralized manner.

According to an aspect of the present invention, a method for authenticating tokens for web services is provided, comprising:
a SP. as a WSR, sending an authentication request to an IdP for authenticating a user token: wherein the user token is a SAML assertion or an SAML artifact:
wherein the method further comprises:
   the IdP authenticating the token, sending the authenticating result to the SP, and returning the resource offering of the ID-WSF discovery service of the user to the SP if authentication succeeds:
   the SP requesting the resource offering of an AP from the corresponding ID-WSF discovery service according to the resource offering provided by the IdP, and sending the user token to the ID-WSF discovery service;
   the ID-WSF discovery service sending the user token to the IdP to request the IdP to authenticate the user token;
   the IdP authenticating the user token, and returning the authentication result to the ID-WSF discovery service;
   the ID-WSF discovery service generating a response message which contains a result of authenticating the user token and further contains the resource offering of the AP if authentication succeeds;
   the ID-WSF discovery service sending the generated response message to the SP:
   the SP requesting necessary attribute information from the AP corresponding to the resource offering provided by the ID-WSF discovery service, and sending the user token to the AP;
   the AP sending to the IdP to request the IdP to authenticate the user token;
   the IdP authenticating the user token; and returning the authentication result to the AP;
   the AP generating a response message which contains a result of authenticating the user token and further contains the attribute required by the SP if authentication succeeds; and
   the AP sending the response message generated by the AP to the SP.

According to a second aspect of the present invention, an SP comprising modules for implementing a method for authenticating tokens for web services according to the above-outlined method is provided.

According to a third aspect of the present invention, an IdP comprising modules for implementing a method for authenticating tokens for web services according to the above-outlined method is provided.

The method, and entity for authenticating tokens for web services only need to authenticate the tokens provided by the WSR, and it is unnecessary to authenticate tokens re-generated by other entities. Therefore, the authentication can be uniformly performed through the entity for authenticating tokens, and the WSP only needs to send the tokens and authentication results. Compared with the conventional art, the embodiments use the entity for authenticating tokens to manage and maintain tokens in a centralized manner. Moreover, in the technical solution of using an entity for authenticating tokens which manages and maintains tokens in a centralized manner provided in the embodiments of the present invention, it is unnecessary for the WSP to regenerate tokens. That is, the WSP has no need to generate another SAML assertion. Therefore, the logical functions of the WSP are simplified through the embodiments of the present invention.

### BRIEF DESCRIPTION OF THE DRAWINGS

FIG. 1 is a flowchart of authenticating tokens in the conventional art;
FIG. 2 is a flowchart of a method for authenticating tokens for web services in the first embodiment;
FIG. 3 shows a structure of a system for authenticating tokens for web services in the first embodiment;
FIG. 4 shows a block diagram of a WSP in the first embodiment;
FIG. 5 shows a block diagram of an entity for authenticating tokens in the first embodiment;
FIG. 6 is a flowchart of a method for authenticating tokens for web services in the second embodiment;
FIG. 7 is a flowchart of a method for authenticating tokens for web services in the third embodiment; and
FIG. 8 is a flowchart of a method for authenticating tokens for web services in the fourth embodiment.

### DETAILED DESCRIPTION OF THE EMBODIMENTS

A method, a system, and an entity for authenticating tokens for web services are elaborated in the following with reference to accompanying drawings and embodiments:

### Embodiment 1

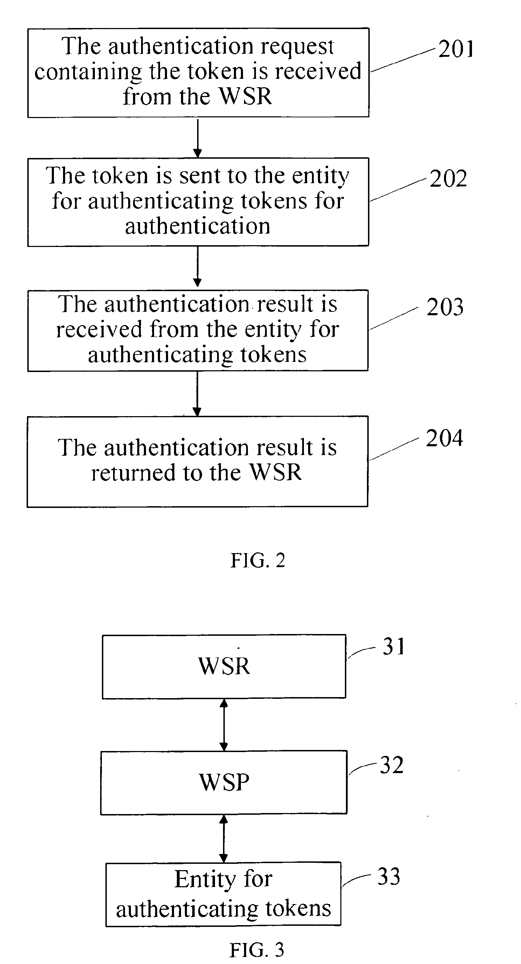

As shown in FIG. 2, a method for authenticating tokens for web services is provided in the embodiment, comprising the following steps:
Step 201: An authentication request is received from a WSR, where the request contains a token.

If a user requests the SP for a corresponding service and the user needs to be authenticated by the WSP, the SP will serve as the WSR and send an authentication request to the WSP, where the authentication request contains a token provided by the WSR.
Step 202: The token is sent to an entity for authenticating tokens for authentication.

The WSP sends the token to the entity for authenticating tokens so that the entity for authenticating tokens can authenticate the token.
Step 203: The authentication result returned by the entity for authenticating tokens is received.

After authentication succeeds, the entity for authenticating tokens returns the authentication result to the WSP.
Step 204: The authentication result is sent to the WSR.

After receiving the authentication result returned from the entity for authenticating tokens, the WSP sends the authentication result to the WSR. After that, authentication of the user token is completed.

A system for authenticating tokens for web services, which corresponds to the preceding method for authenticating tokens for web services, is further provided in this embodiment. As shown in FIG. 3, the system for authenticating tokens comprises a WSR 31, a WSP 32, and an entity for authenticating tokens 33.

The WSR 31 provides the WSP 32 with the token. After receiving the token from the WSR 31, the WSP 32 sends the token to the entity for authenticating tokens 33. The entity for authenticating tokens 33 authenticates the received token and returns the authentication result to the WSP 32. Then, the WSP 32 sends the authentication result to the WSR 31.

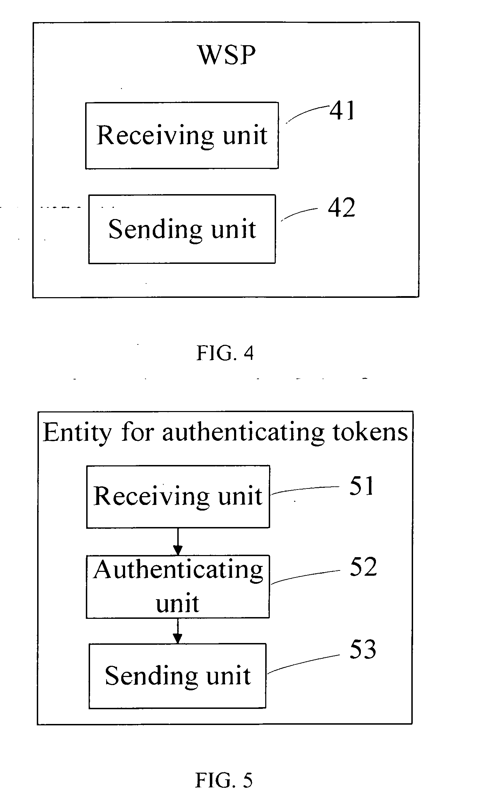

As shown in FIG. 4, the WSP in this embodiment comprises a receiving unit 41 and a sending unit 42. The receiving unit 41 is adapted to receive the token from the WSR, and the sending unit 42 is adapted to send the token to the entity for authenticating tokens. After authenticating the token, the entity for authenticating tokens returns the authentication result to the WSP. The WSP receives the authentication result returned by the entity for authenticating tokens through the receiving unit 41, and then sends the authentication result to the WSR through the sending unit 42.

As shown in FIG. 5, the entity for authenticating tokens in this embodiment comprises: a receiving unit 51, an authenticating unit 52, and a sending unit 53. The receiving unit 51 is adapted to receive the token sent by the WSP, the authenticating unit 52 is adapted to authenticate the token, and the sending unit 53 is adapted to send the authentication result to the WSP.

In this embodiment, it is only necessary to authenticate the tokens provided by the WSR, and authentication of tokens re-generated by other entities is not required. Therefore, the authentication may be performed uniformly through the entity for authenticating tokens, and the WSP only needs to send the tokens and authentication results. In this embodiment, the entity for authenticating tokens is used to manage and maintain tokens in a centralized manner. Moreover, in the technical solution of using an entity for authenticating tokens which manages and maintains tokens in a centralized manner provided in the embodiments, it is unnecessary for the WSP to regenerate tokens. That is, the WSP has no need to generate another SAML assertion. Therefore, the logical functions of the WSP are simplified.

### Embodiment 2

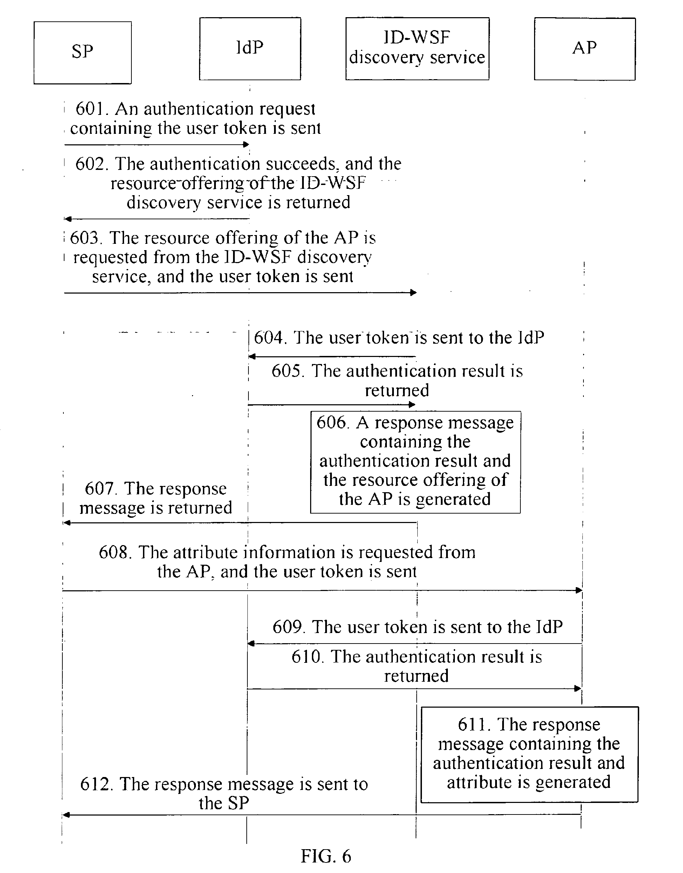

This embodiment applies the scenario of obtaining the user identity attribute as shown in FIG. 1. In this scenario, the SP serves as the WSR, the IdP, ID-WSF discovery service, and AP serves as the WSPs, and the IdP serves as the entity for authenticating tokens as it is provided with an authentication function. As shown in FIG. 6, in this scenario, the method for authenticating tokens for web services comprises the following steps:
Step 601: The SP, as the WSR, sends an authentication request to the IdP for authenticating the user's SAML assertion, where the SAML assertion is the token provided by the user.
Step 602: The IdP authenticates the user's SAML assertion, sends the authentication result to the SP, and returns the resource offering of the ID-WSF discovery service of the user to the SP if authentication succeeds.

After Step 601 and Step 602, the IdP has finished authentication of the user. As the user identity attribute needs to be obtained, the resource offering of the ID-WSF discovery service of the user is returned to the SP in Step 602, and then the AP can be found through the ID-WSF discovery service so as to obtain the identity attribute from the AP.
Step 603: The SP requests the resource offering of the AP from the corresponding ID-WSF discovery service according to the resource offering provided by the IdP, and sends the user's SAML assertion (namely, the token) to the ID-WSF discovery service.
Step 604: The ID-WSF discovery service sends the SAML assertion to the IdP to request the IdP to authenticate the token.
Step 605: The IdP authenticates the token, and returns the authentication result to the ID-WSF discovery service.
Step 606: The ID-WSF discovery service generates a response message, where the response message contains a result of authenticating the SAML assertion, and further contains the resource offering of the AP if authentication succeeds.
Step 607: The ID-WSF discovery service sends the response message in Step 606 to the SP.

After Steps 603 - 607, the ID-WSF discovery service has authenticated the resource offering of the AP as required by the SP, and meanwhile returns the resource offering of the AP to the SP.
Step 608: The SP requests necessary attribute information from the AP corresponding to the resource offering provided by the ID-WSF discovery service, and sends the SAML assertion to the AP.
Step 609: The AP sends the SAML assertion to the IdP to request the IdP to authenticate the token.
Step 610: The IdP authenticates the token, and returns the authentication result to the AP.
Step 611: The AP generates a response message, where the response message contains a result of authenticating the SAML assertion, and further contains the attribute required by the SP if authentication succeeds.
Step 612: The AP sends the response message in Step 611 to the SP.

After Steps 608 - 612, the AP has authenticated the user attribute as required by the SP, and returns required attribute to the SP. In actual application, this embodiment may require other resources in addition to the attribute, such as the condition related to user's service customization. Given any changes in required resources, the authentication process remains unchanged as described in Steps 608 - 612, except that only the resources initially required by the SP and the returned resources are changed.

A system for authenticating tokens for web services, which corresponds to the preceding method for authenticating tokens for web services, is further provided in this embodiment. The basic framework of the system for authenticating tokes comprises more than one system for authenticating tokens described in FIG. 3.

The system for authenticating tokens provided in this embodiment comprises: an IdP, an SP, an ID-WSF discovery service, and an AP. FIG. 6 shows the detailed process, where the IdP serves as the entity for authenticating tokens, the IdP, ID-WSF discovery service, and AP serves as the WSPs if necessary, and the SP serves as the WSR.

In this embodiment, the IdP and ID-WSF discovery service as the WSPs need to generate the resource offering after the token is authenticated, and send the resource offering to the SP. For example, the IdP needs to generate the resource offering of the ID-WSF discovery service, and the ID-WSF discovery service needs to generate the resource offering of the AP. Thus, the SP can request corresponding resources from the service entities corresponding to the resource offering of the ID-WSF discovery service and AP, and then send the token to the service entity. Therefore, for the WSP described in FIG.4, a resource offering generating unit is needed for the WSP in this embodiment to generate the corresponding resource offering.

In this embodiment, the AP, as the WSP, generates resources after the token is authenticated, and sends the resources to the WSP, where the resources generated by the AP are attributes required by the SP. Therefore, for the WSP described in FIG.4, a resource generating unit is needed for the WSP in this embodiment to generate corresponding resources.

### Embodiment 3

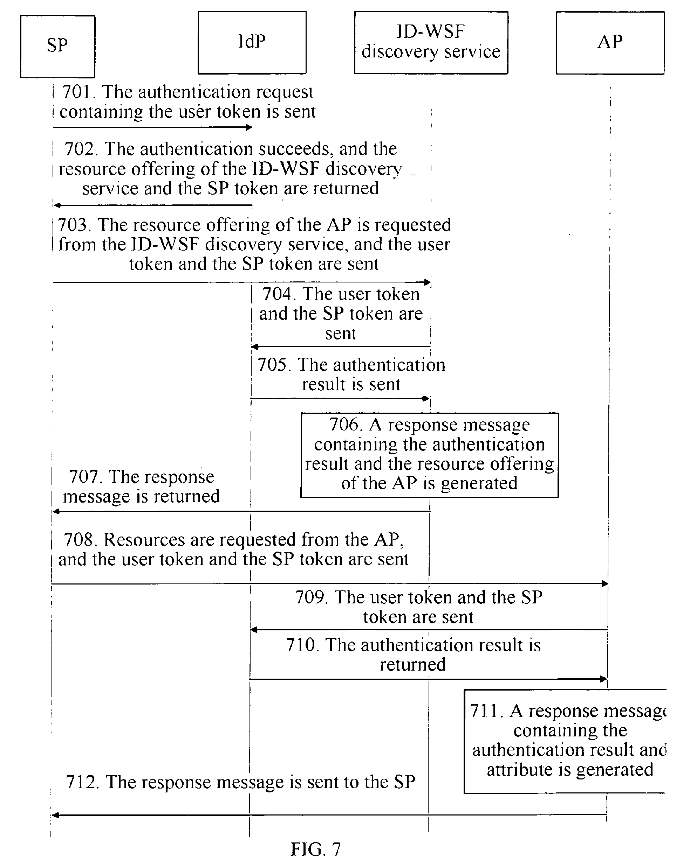

This embodiment also applies the scenario of obtaining the user identity attribute as shown in FIG. 1. In this scenario, the SP also serves as the WSR, the IdP, ID-WSF discovery service, and AP serves as the WSPs, and the IdP serves as the entity for authenticating tokens. As shown in FIG. 7, in this scenario, the method for authenticating tokens for web services comprises the following steps:
Step 701: The SP, as the WSR, sends an authentication request to the IdP for authenticating the user's SAML assertion, where the SAML assertion is a token provided by the user.
Step 702: The IdP authenticates the user's SAML assertion, and sends the authentication result to the SP; if authentication succeeds, the IdP further returns to the SP the resource offering of the ID-WSF discovery service of the user and the token allocated by the IdP for the SP.

After Step 701 and Step 702, the IdP has finished authentication of the user. As the user identity attribute needs to be obtained, the resource offering of the ID-WSF discovery service of the user is returned to the SP in Step 702, and then the AP can be found through the ID-WSF discovery service so as to obtain the identity attribute from the AP.

Moreover, to further secure the access by the SP to the ID-WSF discovery service and other WSPs, the SP token is returned to the SP for authenticating the SP in the subsequent flows.
Step 703: The SP requests the resource offering of the AP from the corresponding ID-WSF discovery service according to the resource offering provided by the IdP, and sends the user token and the SP token to the ID-WSF discovery service.
Step 704: The ID-WSF discovery service sends the user token and SP token to the IdP to request the IdP to authenticate the tokens.
Step 705: The IdP authenticates the token, and returns the authentication result to the ID-WSF discovery service.
Step 706: The ID-WSF discovery service generates a response message, where the response message contains a result of authenticating the token, and further contains the resource offering of the AP if authentication succeeds.
Step 707: The ID-WSF discovery service sends the response message in Step 706 to the SP.

After Steps 703 - 707, the ID-WSF discovery service has authenticated the resource offering of the AP as required by the SP, and meanwhile returns the resource offering of the AP to the SP.
Step 708: The SP requests necessary attribute information from the AP corresponding to the resource offering provided by the ID-WSF discovery service, and sends the user token and SP token to the AP.
Step 709: The AP sends the user token and SP token to the IdP to request the IdP to authenticate the tokens.
Step 710: The IdP authenticates the tokens, and returns the authentication results to the AP.
Step 711: The AP generates a response message, where the response message contains a result of authenticating the token, and further contains the attribute required by the SP if authentication succeeds.
Step 712: The AP sends the response message in Step 711 to the SP.

After Steps 708 - 712, the AP has authenticated the user attribute as required by the SP, and returns the required attribute to the SP. In actual application, this embodiment may require other resources in addition to the attribute, such as the condition related to user's service customization. Given any changes in required resources, the authentication process remains unchanged as described in Steps 708 - 712, except that only the resources initially required by the SP and the returned resources are changed.

In Steps 703 - 712, the SP token is authenticated. Therefore, the current message interaction is better secured when the ID-WSF discovery service and the AP are being accessed.

A system for authenticating tokens for web services, which corresponds to the preceding method for authenticating tokens for web services, is further provided in the embodiment. The basic framework of the system for authenticating tokens comprises more than one system for authenticating tokens described in FIG. 3.

The system for authenticating tokens in this embodiment comprises: an IdP, an SP, an ID-WSF discovery service, and an AP. FIG. 7 shows the detailed process, where the IdP serves as the entity for authenticating tokens serves, the IdP, ID-WSF discovery service, and AP serves as the WSPs, and the SP serves as the WSR.

In this embodiment, after the authentication of the token succeeds, the IdP, as the WSP, generates the SP token, and then sends this SP token to the SP so that the SP token can be authenticated at the same time in subsequent authentication operations.

In the second and third embodiments, the IdP, the ID-WSF discovery service, and the AP are required to authenticate tokens through the IdP. As the IdP currently has been designed to authenticate tokens, modifications on logical functions of other entities and network reconstruction costs can be reduced.

In actual application, tokens can be authenticated by a stand-alone entity, for example, by a public authentication query database. In this way, all WSPs can authenticate tokens through this public authentication query database, thereby simplifying the logical functions of the IdP. This authentication mode, however, is not as secure as the one using the IdP, because the public authentication query database is open due to lack of management by the IdP.

### Embodiment 4

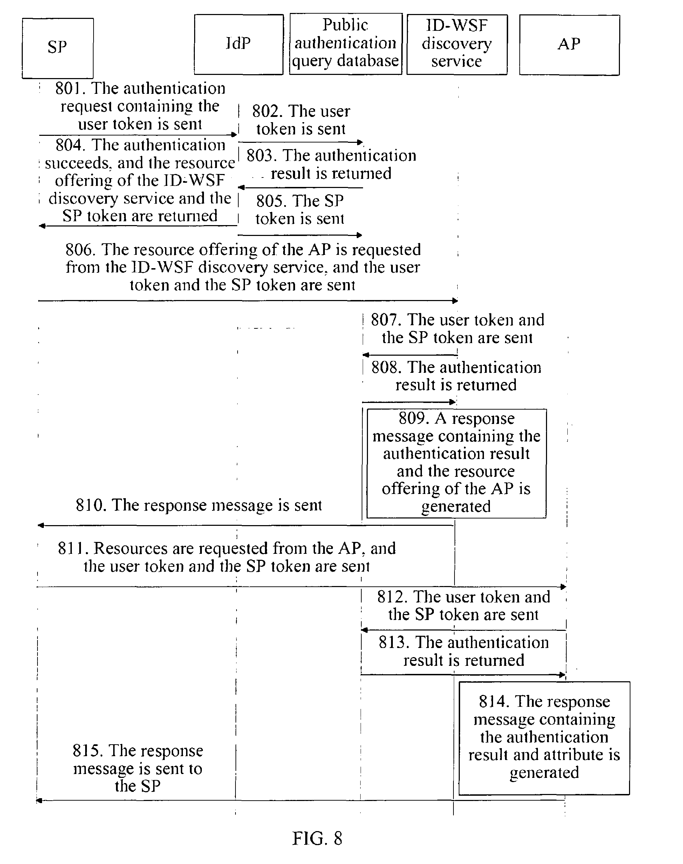

This embodiment details a public authentication query database for token authentication, and applies the scenario of obtaining the user identity attribute as shown in FIG. 1. In this scenario, the SP serves as the WSR, the IdP, ID-WSF discovery service, and AP serves as the WSPs, and the public authentication query database serves as the entity for authenticating tokens. As shown in FIG. 8, in this scenario, the method for authenticating tokens for web services comprises the following steps:
Step 801: The SP, as the WSR, sends an authentication request to the IdP for authenticating the user's SAML assertion, where the SAML assertion is a user token.
Step 802: The IdP sends the user token to the public authentication query database.
Step 803: The public authentication query database authenticates the token, and returns the authentication result to the IdP.
Step 804: The IdP sends the authentication result to the SP, and returns to the SP the resource offering of the ID-WSF discovery service of the user and the token allocated for the SP by the IdP if authentication succeeds.
Step 805: The IdP sends the allocated token for the SP to the public authentication query database, and the public authentication query database saves the SP token.

After Step 801 and Step 805, the IdP has finished authentication of the user. As the user identity attribute needs to be obtained, the resource offering of the ID-WSF discovery service of the user is returned to the SP in Step 804, and then the AP can be found through the ID-WSF discovery service so as to obtain the identity attribute from the AP.

Moreover, to further secure the access by the SP to the ID-WSF discovery service and other WSPs, in this embodiment, the SP token is returned to the SP and then sent to the public authentication query database for authentication the SP in the subsequent flows.
Step 806: The SP requests the resource offering of the AP from the corresponding ID-WSF discovery service according to the resource offering provided by the IdP, and sends the user token and the SP token to the ID-WSF discovery service.
Step 807: The ID-WSF discovery service sends the user token and SP token to the public authentication query database to request the public authentication query database for authenticating the tokens.
Step 808: The public authentication query database authenticates the tokens, and returns the authentication results to the ID-WSF discovery service.
Step 809: The ID-WSF discovery service generates a response message, where the response message contains a result of authenticating the token, and further contains the resource offering of the AP if authentication succeeds.
Step 810: The ID-WSF discovery service sends the response message in Step 809 to the SP.

After Steps 806 - 810, the ID-WSF discovery service has authenticated the resource offering of the AP as required by the SP, and meanwhile returns the resource offering of the AP to the SP.
Step 811: The SP requests necessary attribute information from the AP corresponding to the resource offering provided by the ID-WSF discovery service, and sends the user token and SP token to the AP.
Step 812: The AP sends the user token and SP token to the public authentication query database to request the public authentication query database for authenticating the tokens.
Step 813: The public authentication query database authenticates the tokens, and returns the authentication results to the AP.
Step 814: The AP generates a response message, where the response message contains a result of authenticating the token, and further contains the attribute required by the SP if authentication succeeds.
Step 815: The AP sends the response message in Step 814 to the SP.

After Steps 811 - 815, the AP has authenticated the user attribute as required by the SP, and returns required attribute to the SP. In actual application, this embodiment may require other resources in addition to the attribute, such as the condition related to user's service customization. Given any changes in required resources, the authentication process remains unchanged as described in Steps 811 - 815, except that only the resources initially required by the SP and the returned resources are changed.

In Steps 806 - 815, the user token and the SP token are authenticated at the same time so that current message interaction is better secured when the ID-WSF discovery service and the AP are being accessed.

In this embodiment, the method of using a public authentication query database for authentication is also applicable when the SP token is not required to be authenticated. Therefore, in actual application, no SP token is required to be generated or sent, and the public authentication query database is not required to save the SP token

A system for authenticating tokens for web services, which corresponds to the preceding method for authenticating tokens for web services, is further provided in this embodiment. The basic framework of the system for authenticating tokens comprises more than one system for authenticating tokens described in FIG. 3.

The system for authenticating tokens in this embodiment comprises: an IdP, an SP, an ID-WSF discovery service, an AP, and a public authentication query database. FIG. 8 shows the detailed process, where the public authentication query database serves as the entity for authenticating tokens, the IdP, ID-WSF discovery service, and AP serves as the WSPs, and the SP serves as the WSR.

In this embodiment, after the authentication of the token succeeds, the IdP, as the WSP, generates the SP token, and sends this token to the SP so that the SP is authenticated at the same time in the subsequent authentication operations.

In preceding embodiments, the SAML artifact can also be used as the user token or SP token.

In the second, third, and fourth embodiments, it is unnecessary for the SP to bind the token with corresponding resource offering. This decreases the load of data processing in the SP.

The embodiments of the present invention are mainly applied in WSPs, such as IdP, ID-WSF discovery service, and AP.

According to the description of the preceding embodiments, it is obvious for those skilled in the art that the present invention can be implemented by a combination of software and a necessary hardware platform. It is also applicable that the present invention is implemented through hardware. In many cases, however, the former is preferred. Based on such understanding, the technical solution or the part that contributes to the conventional art as described in the present invention can be implemented by software products. Such products, which can be saved in a readable storage media (such as floppy disks, hard disks, and optical disks), comprises a series of commands that enables a device (such as a server or network device) to perform the method elaborated in each embodiment of the present invention.

The above descriptions are merely embodiments of the present invention, but not intended to limit the protection scope of the present invention. Variations or replacements easily made by those skilled in the art without departing from the technical scope of the present invention fall within the protection scope of the present invention as defined by the appended claims. Therefore, the protection scope of the present invention shall be defined according to the protection scope claimed by the claims.

## Claims

1. A method for authenticating tokens for web services, comprising:
a Service Provider, as a web service requester, sending an authentication request to an identity provider for authenticating a user token (601); wherein the user token is a short-lived security assertion markup language assertion or a security assertion markup language artifact,
the method further comprises:
the identity provider authenticating the user token, sending the authenticating result to the service provider and returning
the resource offering of an identity web-service framework discovery service of the user to the service provider if authentication succeeds (602);
the service provider requesting the resource offering of a attribute provider from the corresponding identity web-service framework discovery service according to the resource offering provided by the identity provider and sending the user token to the identity web-service framework discovery service (603);
the identity web-service framework discovery service sending the user token to the identity provider to request the identity provider to authenticate the user token (604):
the identity provider authenticating the user token, and returning the authentication result to the identity web-service framework discovery service (605);
the identity web-service framework discovery service generating a response message which contains a result of authenticating the user token and further contains the resource offering of the attribute provider if authentication succeeds (606);
the identity web-service framework discovery service sending the generated response message to the identity provider (607);
the service provider requesting necessary attribute information from the attribute provider corresponding to the resource offering provided by the identity web-service framework discovery service, and sending the user token to the attribute provider (608);
the attribute provider sending to the identity provider to request the identity provider to authenticate the user token (609);
the identity provider authenticating the user token, and returning the authentication result to the attribute provider (610);
the attribute provider generating a response message which contains a result of authenticating the user token and further contains the attribute required by the service provider if authentication succeeds (610); and
the attribute provider sending the response message generated by the attribute provider to the service provider (612).

2. A Service Provider, comprising modules for implementing a method for authenticating tokens for web services according to claim 1.

3. An identity provider, comprising modules for implementing a method for authenticating tokens for web services according to claim 1.

## Patentansprüche

1. Verfahren zum Authentisieren von Marken für Web-Dienste, das Folgendes umfasst:
ein Service Provider, als ein Web Service Requester, sendet eine Authentisierungsanforderung an einen Identitäts-Provider zum Authentisieren einer Benutzermarke (601); wobei die Benutzermarke eine kurzlebige Security Assertion Markup Language Assertion oder ein Security Assertion Markup Language-Artefakt ist;
wobei das Verfahren weiterhin Folgendes umfasst:
der Identitäts-Provider authentisiert die Benutzermarke, sendet das Authentisierungsergebnis an den Service Provider und schickt das Ressourcenangebot eines Identity Web Service Framework Discovery-Dienstes des Benutzers an den Service Provider zurück, falls die Authentisierung erfolgreich ist (602);
der Service Provider fordert das Ressourcenangebot eines Attributs-Providers von dem entsprechenden Identity Web Service Framework Discovery-Dienstes gemäß dem durch den Identitäts-Provider bereitgestellten Ressourcenangebot an und sendet die Benutzermarke an den Identity Web Service Framework Discovery-Dienst (603);
der Identity Web Service Framework Discovery-Dienst sendet die Benutzermarke an den Identitäts-Provider, um anzufordern, dass der Identitäts-Provider die Benutzermarke authentisiert (604);
der Identitäts-Provider authentisiert die Benutzermarke und schickt das Authentisierungsergebnis an den Identity Web Service Framework Discovery-Dienst zurück (605);
der Identity Web Service Framework Discovery-Dienst generiert eine Antwortnachricht, die ein Ergebnis des Authentisierens der Benutzermarke enthält und weiterhin das Ressourcenangebot des Attributs-Providers enthält, falls die Authentisierung erfolgreich ist (606);
der Identity Web Service Framework Discovery-Dienst sendet die generierte Antwortnachricht an den Identitäts-Provider (607);
der Service Provider fordert notwendige Attributsinformationen von dem Attributs-Provider entsprechend dem durch den Identity Web Service Framework Discovery-Dienst bereitgestellten Ressourcenangebot an und sendet die Benutzermarke an den Attributs-Provider (608);
der Attributs-Provider sendet an den Identitäts-Provider, um anzufordern, dass der Identitäts-Provider die Benutzermarke authentisiert (609);
der Identitäts-Provider authentisiert die Benutzermarke und schickt das Authentisierungsergebnis zurück an den Attributs-Provider (610);
der Attributs-Provider generiert eine Antwortnachricht, die ein Ergebnis des Authentisierens der Benutzermarke enthält und weiterhin das von dem Service Provider angeforderte Attribut enthält, falls die Authentisierung erfolgreich ist (610); und
der Attributs-Provider sendet die durch den Attributs-Provider generierte Antwortnachricht an den Service Provider (612).

2. Service Provider, umfassend Module zum Implementieren eines Verfahrens zum Authentisieren von Marken für Web-Dienste nach Anspruch 1.

3. Identitäts-Provider, umfassend Module zum Implementieren eines Verfahrens zum Authentisieren von Marken für Web-Dienste nach Anspruch 1.

## Revendications

1. Procédé d'authentification de jetons pour services Internet, comprenant :
un fournisseur de services, comme demandeur de service Internet, envoyant une demande d'authentification à un fournisseur d'identité pour authentifier un jeton d'utilisateur (601) ; où le jeton d'utilisateur est une assertion de langage de balisage d'assertion de sécurité de courte durée ou un artéfact de langage de balisage d'assertion de sécurité ;
le procédé comprend en outre :
le fournisseur d'identité authentifiant le jeton d'utilisateur, envoyant le résultat d'authentification au fournisseur de services et renvoyant l'offre de ressources d'un service de découverte de structure de services Internet d'identité de l'utilisateur au fournisseur de services si l'authentification réussit (602) ;
le fournisseur de services demandant l'offre de ressources d'un fournisseur attributs auprès du service de découverte de structure de services Internet d'identité correspondant en fonction de l'offre de ressources délivrée par le fournisseur d'identité, et envoyant le jeton d'utilisateur au service de découverte de structure de services Internet d'identité (603) ;
le service de découverte de structure de services Internet d'identité envoyant le jeton d'utilisateur au fournisseur d'identité pour demander au fournisseur d'identité d'authentifier le jeton d'utilisateur (604) ;
le fournisseur d'identité authentifiant le jeton d'utilisateur, et renvoyant le résultat d'authentification au service de découverte de structure de services Internet d'identité (605) ;
le service de découverte de structure de services Internet d'identité générant un message de réponse qui contient un résultat d'authentification de jeton d'utilisateur et qui contient en outre l'offre de ressources du fournisseur d'attributs en cas de succès de l'authentification (606) ;
le service de découverte de structure de services Internet d'identité envoyant le message de réponse généré au fournisseur d'identité (607) ;
le fournisseur de services demandant des informations d'attribut nécessaires auprès du fournisseur d'attributs correspondant à l'offre de ressources délivrée par le service de découverte de structure de services Internet d'identité, et envoyant le jeton d'utilisateur au fournisseur d'attributs (608) ;
le fournisseur d'attributs envoyant au fournisseur d'identité la demande d'interroger le fournisseur d'identité pour authentifier le jeton d'utilisateur (609) ;
le fournisseur d'identité authentifiant le jeton d'utilisateur, et retournant le résultat d'authentification au fournisseur d'attributs (610) ;
le fournisseur d'attributs générant un message de réponse qui contient un résultat d'authentification du jeton d'utilisateur et qui contient en outre l'attribut requis par le fournisseur de services si l'authentification réussit (610) ; et
le fournisseur d'attributs envoyant le message de réponse généré par le fournisseur d'attributs au fournisseur de services (612).

2. Fournisseur de services comprenant des modules pour implémenter un procédé pour authentifier des jetons pour des services Internet selon la revendication 1.

3. Fournisseur d'identité comprenant des modules pour implémenter un procédé pour authentifier des jetons pour des services Internet selon la revendication 1.
